# EUROPEAN PATENT APPLICATION

(11) **EP 4 491 571 A1**
(43) Date of publication of application: **15.01.2025**
(21) Application number: 24188216.6
(22) Date of filing: 12.07.2024
(51) Int. Cl.: C01B 32/05, B01J 20/20, C01B 32/196, C01B 32/366, B01J 20/34, C09C 1/48, C09C 1/56

(54) **REMOVAL OF IMPURITIES FROM CARBONACEOUS MATERIALS**

(30) Priority: 13.07.2023 EP 23185373
(71) Applicant: Leibniz-Institut für Agrartechnik und Bioökonomie e.V. (ATB), 14469 Potsdam (DE)
(72) Inventor: Hoffmann, Thomas, 14469 Potsdam (DE); Marzban, Nader, 14469 Potsdam (DE)
(74) Representative: Braeuning Schubert Patentanwälte GbR

(57) **Abstract**

The present invention relates to a method for removing impurities from carbonaceous materials, comprising a step of treating the carbonaceous materials with plasma, selected from dry cold plasma and wet plasma. Furthermore, the present invention relates to the cleaned carbonaceous materials prepared by the method according to the invention and to cleaned carbonaceous materials that are suitable for use in agricultural applications, soil amendment, and water purification.

## Description

### Field of the invention

The present invention refers to a method for removing impurities from carbonaceous materials and for adapting further characteristics of the treated material, comprising a step of treating the carbonaceous material with plasma selected from the group consisting of dry plasma and wet plasma. Furthermore, the present invention refers to cleaned carbonaceous materials with adapted characteristics and the use thereof.

### Background of the invention

Impurities in carbonaceous materials are the main reason for restrictions in the allowance to use these materials in certain applications. In order not to introduce hazardous contaminants into the environment, limits are set concerning the amount of contaminations, especially in respect of the content of polycyclic aromatic hydrocarbons (PAHs), heavy metals and other hazardous components. With these restrictions the use of untreated carbonaceous materials like biochar and hydrochar in applications in agriculture, soil amendment, water purification, and fuel usage is not allowed. Additionally, fluorinated organic compounds like per- and polyfluoroalkyl substances (PFAS), which are synthetic organic compounds are known to be chemically and physically very stable and should not be further introduced into the environment by using carbonaceous materials.

There is a great demand to adapt certain characteristics of carbonaceous materials to increase usability in different applications.

Furthermore, to allow to provide great amounts of purified carbonaceous materials the process of cleaning the materials must be cost effective and should be performed using only a small amount of energy. Here, each difference in energy consumption can make a large difference in whether the purification of the carbonaceous materials is economically justifiable.

### State of the art

Up to now, attempts have been made to remove adhering or embedded impurities from carbonaceous materials by chemical precipitation, adsorption, ion exchange processes or leaching. This requires a relatively large amount of energy and the resulting process substances pollute the environment.

There are also possibilities to remove contaminants by bioremediation (by bacteria, fungi and algae) and phytoremediation (by plants), but these processes take a long time. Furthermore, in the state of the art it is known to use thermal plasma at a temperature of between about 3000 °C and preferably at about 100,000 °C. The respective method as described in EP 2 284 123 is used for the removal of metal contaminants in nanostructured carbonaceous materials. The state of the art is silent about the removal of polycyclic aromatic hydrocarbons and per- and polyfluoroalkyl compounds. Furthermore, the state of the art is silent about the use of plasma-activated water or a method combing cold dry plasma-treatment and treatment with plasma-activated water for removal of contaminants, increasing the BET (Brunauer-Emmett-Teller) surface area, reducing of ash content and lowering of the pH value of carbonaceous materials .

In addition the inventors of the present invention identified the use of plasma-activated water as smooth sanitizing method for food (Ehlbeck, J., Brandenburg, R., von Woedtke, T., Krohmann, U., Stieber, M., & Weltmann, K.-D. (2008) and for disinfection purposes in hospitals (PLASMOSE - antimicrobial effects of modular atmospheric plasma sources. GMS Krankenhaushygiene Interdisziplinar, 3(1), Doc14). But the state of the art is silent about cleaning carbonaceous materials using plasma-activated water, and silent about the combination of method steps utilizing dry cold plasma and wet plasma in form of plasma-activated water.

### Object of the invention

The object of the present invention is to overcome the disadvantages of the state of the art and to provide a method that allows the cleaning of carbonaceous materials while at the same time adapting further characteristics of the materials. Impurities like carcinogenic impurities (PAHs), aromatics and inorganic compounds (e.g., heavy metals, Si, and chlorine) are removed or reduced and at the same time the BET surface area is increased and the pH value is decreased by the treatment after the carbonization process.

The aim of the present invention is reached by providing a method according to main claim 1 and the embodiments of the dependent claims. Furthermore, the aim of the present invention is reached by carbonaceous materials cleaned according to the method of the invention and the use thereof. The present invention refers to a method for removing impurities from carbonaceous materials. Furthermore, with performing the method according to the invention, the BET surface area of the carbonaceous materials can be increased and the ash content and the pH value of the carbonaceous materials can be reduced. The method according to the invention allows to provide carbonaceous materials that can be used in various applications because of the reduction of impurities and the adaption of surface properties and characteristics like the BET surface area, pH value, and conductivity and redox voltage. The method according to the invention reduces processing time and costs while producing materials with improved properties.

With an increase in the BET surface area the ability of the carbonaceous materials to absorb substances is increased and the carbonaceous materials can be advantageously used in filter systems or batteries. The decrease in contaminants on the surface and in the pores of the carbonaceous materials treated with the method according to the invention increases the effectivity of the materials in respect of absorption. In addition, the carbonaceous materials used as filter system can be cleaned after use by performing the method according to the invention. This means that the method according to the invention can be performed before the application of the carbonaceous materials, afterwards as well as before and afterwards.

The method according to the invention allows the removal of contaminants without causing structural damage to the carbonaceous materials at comparably low costs.

Biochar, as one example of carbonaceous materials, is produced by pyrolysis of biomass. Hydrochar, another example of carbonaceous materials, is the solid product derived from biomass by subjecting the materials to hydrothermal carbonization (htc). Furthermore, in the following plasma-activated water and water that is not activated with plasma are mentioned. In the case that the term non- or not activated water or just water is use it shall describe water that is not activated with plasma. But it does not exclude water that is deionized or otherwise treated, except plasma-activation.

Cold plasma, also known as non-thermal plasma, is a low-temperature plasma that can be produced at ambient pressure using a plasma jet or in a low-pressure plasma system.

### Short summary of the invention

In the present invention the at least two method steps and the combination thereof are the treatment with dry cold plasma and the treatment with wet plasma are disclosed. In the context of the present invention the treatment with dry cold plasma designates the treatment with a gaseous plasma. The treatment with wet plasma is meant to designate the treatment with plasma-activated water. In both method steps the carbonaceous materials are treated with a plasma-activated fluid, namely a plasma-activated gas and/or plasma-activated water.

The aim of the present invention is to overcome the disadvantages of the state of the art. The aim of the present invention is reached by providing a method according to claim 1 of the present invention and the embodiments as disclosed in the dependent claims. Furthermore, the aim of the present invention is reached by providing cleaned carbonaceous materials that are suitable for use in agricultural applications, soil amendment, and water purification. The method according to the invention allows to provide cleaned carbonaceous materials that can be used in several applications, especially in applications that afford materials that do not have a negative impact on the environment. In a further important aspect the method according to the invention allows to be performed with the consumption of less energy than methods of the state of the art.

Preferred is a method according to the invention for removing impurities from carbonaceous materials, comprising a step of treating the carbonaceous materials with plasma, selected from dry cold plasma and wet plasma. The selection of dry cold plasma or wet plasma allows to address different impurities in the carbonaceous materials as detailed in the disclosure of embodiments.

Particularly preferred is the method according to the invention wherein the treating with dry cold plasma is performed by contacting the carbonaceous materials with a cold plasma of at least one process gas, and in that the treating with wet plasma is performed by contacting the carbonaceous materials with plasma-activated water.

In an especially preferred embodiment of the method according to the invention the method comprises the treating with both cold dry plasma and wet plasma, wherein the treating is performed in consecutively steps. In this embodiment the consecutive performing of the different method steps allows to address different impurities present in the carbonaceous materials. Because both method steps can be performed under low energy consumption, this embodiment is advantageous over the state of the art.

Preferred is the method according to the invention wherein the one or the both treating steps are repeatedly performed. Here it is advantageous that the carbonaceous materials can be cleaned with accompanying analyses to find out whether the desired quality of the carbonaceous material is reached. The simplicity of the method steps of the method according to the invention allows the repeating without a great effort of time and costs.

Particularly preferred is the method according to the invention, wherein the treating with dry cold plasma comprises the following steps of a) placing the carbonaceous materials in powdered form in a plasma chamber, b) reducing the pressure in the plasma chamber by means of a vacuum pump to a pressure of 1 Pa to 1000 Pa, at a temperature of 15°C to 40°C, c) introducing the process gas into the chamber under mixing of the carbonaceous materials for a specific amount of time ranging from a few seconds to several hours, and d) turning the process gas off, venting the chamber, removing the treated carbonaceous materials from the plasma chamber, and analyzing the treated carbonaceous materials. The selected time and pressure will depend on the process gas and on the carbonaceous materials in respect of impurities and the desired quality (content of impurities) of the cleaned carbonaceous material.

In another especially preferred embodiment of the method according to the invention after step d) the steps a) to d) are repeated until the desired amount of impurities is removed from the carbonaceous materials. Here, the quality of the provided carbonaceous materials and the desired purity will be the basis to decide on the repeating of these method steps.

Particularly preferred is a method according to the present invention wherein after step d) the treated carbonaceous materials are subjected to the treatment with water or plasma-activated water in a washing step. The analysis of the treated carbonaceous materials will be the basis to decide whether a washing step is necessary or recommended to wash away impurities from the carbonaceous materials. The use of plasma-activated water allows to further increase the cleaning effect without great operating expense.

Furthermore preferred is the method according to the invention wherein the treatment with wet plasma comprises the following steps of a) providing the carbonaceous materials in a container, b) adding plasma-activated water, c) stirring the dispersion, d) drying the wet plasma-treated carbonaceous materials and e) analyzing the treated carbonaceous material. This method step makes clear that the method according to the invention is advantageous compared to the state of the art. There is no need for expensive equipment and high energy costs to achieve good cleaning results as detailed in the examples.

Especially advantageous is the method according to the invention wherein the steps a) to d) are repeated until the desired amount of impurities is removed from the carbonaceous materials.

In a preferred embodiment of the method according to the invention, the weight ratio of carbonaceous materials to plasma-activated water is between 1:5 and 1:60, and the treating time is between 5 minutes to 180 minutes. Furthermore preferred is the method according to the invention, wherein the weight ratio of carbonaceous materials to plasma-activated water is 1:40, and the treatment time is 45 minutes.

In particular preferred is the method according to the invention wherein the carbonaceous materials are selected from biochar, hydrochar, activated carbon, graphene, graphene derivatives, and the mixtures thereof. As can be derived from the examples the method according to the invention has proven to be very successful in cleaning different carbonaceous materials and therefore has a broad applicability.

Especially advantageous is the method according to the invention wherein impurities are selected from organic and inorganic impurities, and in that the inorganic impurities are present in their elemental form or as ions. The use of the method according to the invention allows to provide carbonaceous materials that can be used in different applicants by providing materials that follow the requirements concerning environmental regulations.

It is a preferred object of the present invention to provide cleaned carbonaceous materials prepared by the method according to the invention which are suitable for use in agricultural applications, soil amendment, and water purification. The method according to the invention allow to use different carbonaceous materials that fulfil the requirements in respect of environmental regulations.

### Brief Description of Drawings

The present invention will be further illustrated with the attached figures.

In the Figures
- Figure 1: shows the SEM image of reed canary grass biomass;
- Figure 2a: shows the SEM image of untreated biochar from reed canary grass reed before treatment with wet plasma;
- Figure 2b: shows the SEM image analysis of biochar from reed canary grass reed after treatment with wet plasma;
- Figure 3a: shows the SEM image of untreated poplar biochar before treatment with wet plasma;
- Figure 3b: shows the SEM image of poplar biochar after treatment with wet plasma;
- Fig. 4: shows the SEM image of the poplar biomass after combustion;
- Fig. 5a: shows the SEM image of ash remaining after combustion of not treated hydrochar;
- Fig. 5b: shows the FTIR analysis of not treated biochar, water treated biochar and biochar treated with plasma-activated water;
- Fig. 6a: shows the SEM image of graphitic carbon nitride before treatment with plasma-activated water;
- Fig. 6b: shows the SEM image of graphitic carbon nitride after treatment with plasma-activated water;
- Fig 7a: shows the SEM image of not treated (not cleaned) activated carbon;
- Fig. 7b: shows the SEM image of ash from combustion of not treated (not cleaned) activated carbon;
- Fig. 7c: shows the SEM image of activated carbon after treatment with plasma-activated water;
- Fig. 8: shows SEM images of Graphene B;
- Fig. 9: shows the SEM image of Graphene A;
- Fig. 10a: shows the SEM image of Graphene B before treatment with dry cold plasma;
- Fig. 10b: shows the SEM image of Graphene B after treatment with dry cold plasma;
- Fig. 11a: shows the SEM image of a specific zone of Graphene B before treatment with dry cold plasma;
- Fig. 11b: shows the SEM image of a specific zone of Graphene B after treatment with dry cold plasma;
- Fig. 12a: shows an image of sample of Graphene B in water before treatment with dry cold plasma;
- Fig. 12b: shows an image of a sample of Graphene B in water after treatment with dry cold plasma;
- Fig. 13: shows the SEM analysis of Graphene B after cold dry plasma treatment, A) the cleaned surface of the sample, B) the removed impurities from sample, and C) formation of micropores;
- Fig. 14: shows the FTIR analysis of the original sample (GB-before), the plasma-treated sample (GB-AP), and the plasma-treated and chloride-extracted sample (GB-AP-AE);

### Detailed description of the invention / Description of Embodiments

Biochar, hydrochar, activated carbon, graphene and graphene carbon nitride (g-C₃N₄) are widely used in various applications, but their effectiveness can be limited by impurities such as inorganic elements. Furthermore, as already detailed, said carbonaceous materials often includes hazardous impurities like polycyclic aromatic hydrocarbons (PAHs), heavy metals and fluorinated organic compounds like per- and polyfluoroalkyl substances. These contaminants shall not remain in the carbonaceous materials because their release into the environment must be prevented. All of these impurities and contaminants are at least mostly removed from carbonaceous materials by performing the method according to the invention using wet plasma, dry cold plasma or a combination of these method steps. Thus, the method according to the invention provides three method steps that allow to clean the carbonaceous materials depending on the present impurities. In all three method steps the carbonaceous materials are treated with plasma, selected from dry cold plasma and wet plasma. Here, the treating with dry cold plasma as well as the treating with wet plasma in form of plasma-activated water already provide impressing results. To address all possible contaminants the method can be performed as two-step procedure wherein both the treating with dry cold plasma and the treating with plasma-activated water are performed successively. In the two-step procedure the first step can be the treating with dry cold plasma followed by treating the materials with plasma-activated or vice versa.

Furthermore, by performing the method according to the invention a carbonaceous materials are provided with advantageous characteristics what will be discussed in detail below.

### General Procedures

The method steps of treatment with wet plasma and dry plasma are detailed in the following as general procedures. It shall be considered that in the two-step procedure (dry and wet plasma treatment) as one embodiment of the present invention, the general procedures can be followed and the method steps are performed successively. In this embodiment the first method step can be the treatment with dry plasma, followed by the treatment with wet plasma and vice versa.

### Treatment with plasma-activated water (wet plasma)

The experiments with wet plasma in form of plasma-activated water and the comparative examples were performed with a ratio of solid to plasma-activated water or as comparative examples with a ratio of solid to water (not activated) of 1:5, 1:10, 1:20, 1: 40, 1:60, for the time between 5 min to 180 min, at room temperature, with mixing speed of up to 200 rpm. The optimized condition for the samples ensuring that the desired properties are reached and no unwanted alteration of the characteristics take place, was selected as a ratio of 1:40 of solid to plasma-activated water, a treatment time of 45 min, and a mixing speed of 150 rpm. This ensures the maximum removal of pollutants from the tested carbonaceous materials while reaching advantageous properties.

The plasma-activated water used in this invention was kindly provided by Dr. Luma Rossi Ribeiro from System Process Engineering, ATB, Potsdam, and prepared according to Luma Rossi Rebeiro et al. (Ribeiro, L. R., Tribst, A. A. L., & Schlüter, O. K. (2024). Impact of plasma-activated water (PAW) at different temperatures on Alicyclobacillus acidoterrestris spores. LWT, 191, 115629. https://doi.org/10.1016/j.lwt.2023.115629).

In the examples SEM (scanning electron microscope) images are taken and EDX (Energy Dispersive X-ray) analyses are performed to identify the composition of the carbonaceous materials in respect of impurities. The SEM images are shown in the accompanying Figures and the results of the EDX analyses are shown in the respective tables.

Since the high pH value of biochar is a significant limitation for its wider range of application, in some experiments the pH value of the carbonaceous materials, especially of biochar of different origin, is determined before treatment, after treatment with not activated water, and after treatment with plasma-activated water. In addition, further characteristics like BET surface area and ash content are determined.

### Treatment with dry cold plasma

In this method step various plasma gas compositions, including Nitrogen (N₂), Oxygen (O₂), Argon (Ar), Helium (He), Hydrogen (H₂), and Air are used. The selection of gases and their flow rates were based on the specific impurities targeted for removal from carbonaceous materials. Optimization of factors such as power, treatment time (ranging from a few seconds to several hours), pressure, electrode configuration, frequency, and power density was performed for different carbonaceous materials, with a focus on the desired impurity removal.

A quantity of 3-5 grams of activated carbon, graphene, hydrochar, biochar, or other carbonaceous materials was placed in the plasma chamber.

The chamber was designed to prevent the powder from being drawn into the vacuum. Once the desired pressure level was achieved within the chamber, plasma treatment was initiated using appropriate gases based on the target impurity. The desired pressure level generally is in the area of 1 Pa to 1000 Pa. During the plasma treatment, the powder was thoroughly mixed to ensure all particles had exposure to the plasma environment. The duration of plasma treatment ranged from a few minutes, for example in the range of 5 minutes, up to several hours, depending on the impurity level. Subsequently, the concentration of impurities was measured using various techniques (see below) to assess the effectiveness of the treatment while preserving the original structure of the materials. If the impurity concentration reached the desired level, the product was considered suitable for its intended application. In cases where the impurity level exceeded the allowable threshold, the plasma-treated powder is subjected to water extraction and/or to treatment with plasma-activated water.

### Post-Processing by extraction (water as an example)

After dry cold plasma-treatment, the treated sample became hydrophilic and capable of being dispersed in in water. This step facilitated the removal of impurities that were either separated from the sample but not eliminated by the vacuum or those for which the bond between carbon and impurities was weakened but not completely broken. If water extraction was deemed necessary, the dry cold plasma-treated sample was mixed with water for a duration of 5-60 minutes. The ratio of sample to solvent (e.g., water) ranged from 1 (weight of carbon) to 3-40 times (volume of water).

After mixing, the mixture was allowed to settle, and the sample was collected by opening the valve below the extraction tank. Subsequently, the sample was separated from the water using filtration and then dried for a period of time ranging from a few minutes to several hours at temperatures between 25°C and 105°C. Finally, the treated sample was subjected to further analyses to confirm that the treatment successfully removed impurities while preserving the original structure

Here, in a preferred embodiment, after the treatment with dry cold plasma, the water treatment is performed with plasma-activated water to further remove impurities from the carbonaceous materials if desired.

### Analysis and characterization of carbonous materials before and after treating with dry cold plasma.

In the case of advanced applications involving activated carbon and graphene, inorganic compounds were considered as impurities, rather than volatile organic compounds or organic pollutants. The identification of these impurities was carried out using ICP-OES (ICAP6300 Duo by Thermo Scientific) equipped with an autosampler (ASX-520 by CETAC Technologies). Additionally, chlorine impurities were measured using IC (ion chromatography), while the inorganic elements were analyzed using ICP-OES.

### Analysis of hydrochar and biochar (before and after treatment with dry cold plasma)

The following procedures were performed: to extract hydroxymethylfurfural (HMF), catechol, fructose, glucose, sucrose, formic acid, lactic acid, and acetic acid from the hydrochar, 1 g of hydrochar was mixed with 25 ml of distilled water for 15 minutes at 150 rpm. The concentrations of sugars and acids were determined using the UltiMate 3000 UHPLC system from DIONEX, utilizing a Eurokat H column and 0.01 N sulfuric acid as the mobile phase.

To recover phenol, cresol, guaiacol, and furfural, steam distillation was performed at 130°C for 7 minutes using the Vapodest 2000. Prior to steam distillation, 10g of hydrochar was mixed with 50 ml of distilled water and 5 ml of phosphoric acid. The resulting liquid condensate from the steam distillation process was filtered using a PTFE syringe filter and analyzed using an HPLC system (Dionex ICS 3000; Thermo Fisher Scientific Inc., USA) equipped with a Eurospher C18 column. The same system was used to determine HMF and catechol.

The metal, phosphorus, and sulfur content of the hydrochar were analyzed using ICP-OES (ICAP6300 Duo by Thermo Scientific) equipped with an autosampler (ASX-520 by CETAC Technologies). A 0.1g sample of ground and dried hydrochar (60°C) was dissolved in 8ml of HNO₃ for 20 minutes in a microwave system. Subsequently, the solution was centrifuged for 10 minutes at 4500 rpm, and the resulting supernatant was analyzed using ICP-OES. The content of polycyclic aromatic hydrocarbons (PAHs) was measured by analyzing the extract before and after plasma using GC-MS (Agilent 6890 GC plus 5975c MS).

### Characterization of the carbonaceous materials

To ensure the preservation of the original structure of the carbonaceous materials while removing the target impurities, the materials were characterized before and after treatment. To determine the ash content (Ash%) of the hydrochar and biochar, the samples were initially treated at 105°C for 24 hours to calculate the total solid (TS%) per DIN EN 14775. Then it was placed at 550°C for 6h. The remaining materials are considered as ash. The elemental carbon, hydrogen, nitrogen, and sulfur were measured using a Vario El elemental analyzer (Elementar Analysensysteme, Hanau, Germany), while the oxygen content was calculated as: O% = 100 - (C% + H% + S% + N% + Ash%).

FTIR spectra of sample were recorded using a Nicolet iS5 ATR-FTIR (Thermo Scientific, Madison, WI, USA). The surface morphology of the samples was examined using a Phenom ProX Desktop SEM (USA) instrument. The total surface area of samples was measured using nitrogen adsorption-desorption at 77 K with a BET instrument (Micromeritics TriStar II, USA). In addition the pore size of the sample was measured by the same BET instrument, but using CO₂ as gas.

All examples follow the general procedure detailed above unless otherwise stated.

### Examples:

### Example 1 - Analysis of a biochar sample before treatment

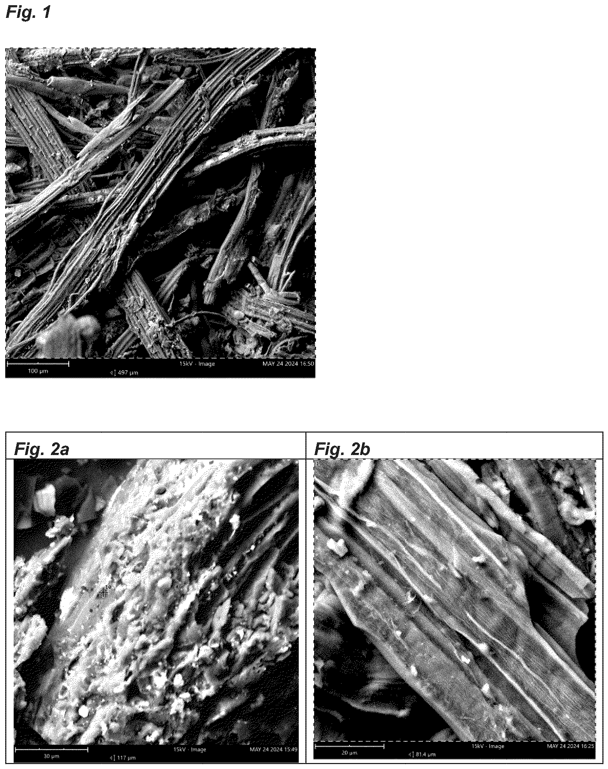

In this example the composition of an organic sample, before carbonization and untreated is determined. This example shows the inorganics present in the biomass, which will remain in the biochar derived therefrom after carbonization. The reed canary grass, and grass, are types of Paludiculture biomass and are known for a high content of inorganics, especially salts. Figure 1 shows the characterization of Phalaris arundinacea, or reed canary grass, and the inorganics present in the biomass. To this end a SEM-EDX analysis was performed and the results are shown in Table 1 below.

**Table 1 - results of SEM-EDX analysis of inorganics in reed canary grass Biomass before treatment**

| **Element Symbol** | **Element Name** | **Weight Concentration** |
|---|---|---|
| O | Oxygen | 49.21 |
| C | Carbon | 48.51 |
| Si | Silicon | 1.49 |
| K | Potassium | 0.25 |
| Ca | Calcium | 0.22 |
| Cl | Chlorine | 0.12 |
| Mg | Magnesium | 0.11 |
| Na | Sodium | 0.09 |

### Examples: Biochar - wet plasma (plasma-activated water)

### Example 2

The different biochars produced from pyrolysis of reed, grass and poplar wood biomasses at a temperature of 550 °C, for 20 minutes, using muffle oven were used in this example. After production the treatment was performed using 1:40 (gram biochar to water/ plasma activated water ratio), treating time (40min), temperature (20 °C), and mixing speed of 150 rpm. In this example the pH value and the ash content of the carbonaceous materials, namely biochar of different origin, is determined before treatment, after treatment with not activated water, and after treatment with plasma-activated water. In addition, the biochar used in this example has a size between 100 to 200 microns, which helps to remove more impurities since plasma-activated water can reach more ions and remove them. Therefore, with the smaller size of biochar and optimized extraction conditions, significantly higher and even complete removal of impurities are expected.

The results are shown in Table 2.

**Table 2: pH value and ash content and ash reduction of carbonaceous materials, non-treated, treated with water or treated with wet plasma**

| **Material** | **Sample** | **pH** | **Ash %** | **Ash reduction %** |
|---|---|---|---|---|
| Grass biochar | original | 10.09 ± 0.30 | 21.33 ± 0.96 | - |
| Grass biochar | treated with plasma-activated water | 6.18 ± 0.15 | 19.27 ± 0.81 | 9.6 |
| Grass biochar | treated with water | 9.68 ± 0.01 | 19.50 ± 0.52 | 8.17 |
| Poplar biochar | original | 9.59 ± 0.01 | 7.70 ± 0.01 | - |
| Poplar biochar | treated with plasma-activated water | 5.94 ± 0.01 | 4.13 ± 0.08 | 46.31 |
| Poplar biochar | treated with water | 9.59 ± 0.02 | 7.37 ± 0.06 | 4.27 |
| Reeds biochar | original | 10.40 ± 0.42 | 15.34 ± 0.00 | - |
| Reeds biochar | treated with plasma-activated water | 5.86 ± 0.02 | 11.36 ± 0.03 | 25.95 |
| Reeds biochar | treated with water | 10.00 ± 0.01 | 13.77 ± 0.17 | 10.25 |

### Example 3

The biochar was produced from pyrolysis of reed biomass at 550 °C, for 20 minutes, using muffle oven. After production the treatment was performed using 1:40 (gram biochar to water/ plasma activated water ratio), treating time (40min), temperature (20 °C), and mixing speed of 150 rpm.

In this example biochar from reed canary grass reed is treated with plasma-activated water. The SEM-EDX analysis of the biochar before and after treatment with plasma-activated water shows that after treatment with wet plasma all surface impurities are removed from the sample. The SEM images of the untreated and treated biochar are shown in Figures 2a (untreated) and 2b (treated). The results are summarized in Tables 3 and 4.

**Table 3: Results of SEM-EDX analysis of untreated biochar from reed canary grass reed**

| **Element Symbol** | **Element Name** | **Weight Conc.** |
|---|---|---|
| C | Carbon | 80.49 |
| Cl | Chlorine | 13.13 |
| K | Potassium | 6.38 |

**Table 4: Results of SEM-EDX analysis of the biochar from reed canary grass reed after treatment with plasma-activated water**

| **Element Symbol** | **Element Name** | **Weight Conc.** |
|---|---|---|
| C | Carbon | 73.27 |
| O | Oxygen | 26.73 |

### Example 4

The poplar biochar was produced by pyrolysis of poplar wood at temperature of 550 °C, for 20 minutes, using muffle oven. After production the treatment was performed using 1:40 (gram biochar to water/ plasma-activated water ratio), treating time (40min), temperature (20 °C), and mixing speed of 150 rpm. In this example poplar biochar was treated with plasma-activated water. To show the results of the treatment SEM-EDX analyses of the treated and untreated biochar were performed. The successful removal of ions, which are mostly cations, resulted in a significant reduction of the pH value of the biochar from 9.59 to 5.94. This shows that a further advantageous effect is reached by the wet plasma-treatment of the biochar.

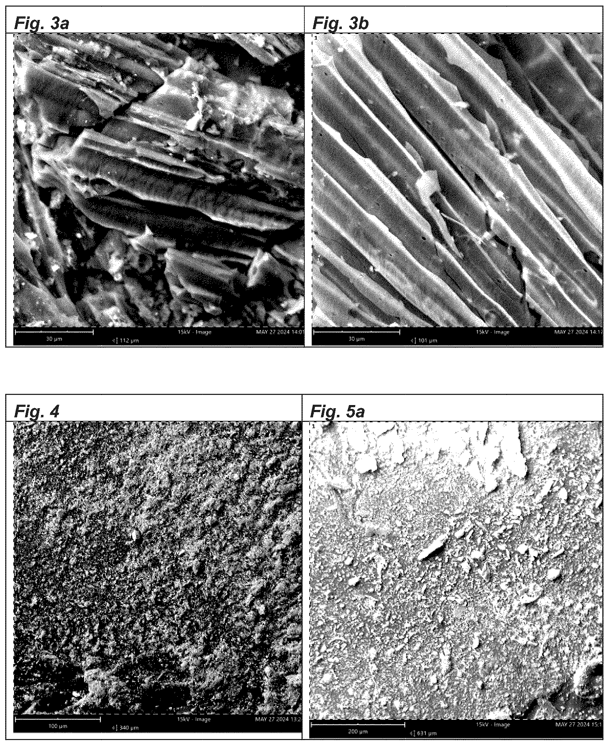

Figures 3a (untreated) and 3b (treated) show the SEM images of the untreated and treated poplar biochar. The results are summarized in Tables 5 and 6.

**Table 5: Results of SEM-EDX analysis of untreated polar biochar**

| **Element Number** | **Element Symbol** | **Element Name** | **Atomic Conc.** | **Weight Conc.** |
|---|---|---|---|---|
| 6 | C | Carbon | 87.75 | 84.06 |
| 8 | O | Oxygen | 12.05 | 15.37 |
| 20 | Ca | Calcium | 0.08 | 0.27 |
| 15 | P | Phosphorus | 0.09 | 0.22 |
| 19 | K | Potassium | 0.03 | 0.08 |
| 12 | Mg | Magnesium | 0.00 | 0.00 |

**Table 6: Results of SEM-EDX analysis of polar biochar treated with plasma-activated water**

| **Element Symbol** | **Element Name** | **Weight Conc.** |
|---|---|---|
| C | Carbon | 100.00 |

### Example 5

The untreated poplar biochar of example 4 was subjected to combustion and the retrieved ash that remains was analyzed using SEM-EDX analysis.

The analysis of the SEM image is shown in Figure 4 and the results are summarized in Table 7.

**Table 7: The SEM-EDX analysis data of the ash remaining after combustion of not treated poplar biochar**

| **Element Number** | **Element Symbol** | **Element Name** | **Atomic Conc.** | **Weight Conc.** |
|---|---|---|---|---|
| 8 | O | Oxygen | 79.50 | 62.79 |
| 20 | Ca | Calcium | 11.87 | 23.49 |
| 19 | K | Potassium | 3.44 | 6.63 |
| 15 | P | Phosphorus | 2.59 | 3.96 |
| 12 | Mg | Magnesium | 2.61 | 3.13 |

As can be derived from Table 7 the content of ash remaining after combustion of the original (not treated) poplar biochar is 7.70%, detailed as follows: Oxygen 62.79%, Calcium 23.49%, Potassium 6.63%, Phosphorus 3.96%, and Magnesium 3.13% (Figure 4). Approximately 46% of the inorganic elements present in the original biochar were removed after treatment with plasma-activated water.

In Table 8 (attached) the results of the performed experiments with biochar as carbonaceous materials are summarized. DM stands for dry mass.

Table 8 clearly indicates that the treatment with plasma-activated water is significantly more efficient than water treatment in removing inorganic contaminants from various types of biochar. For example, the concentration of sodium ions removed from poplar biochar increased from 201.6 mg/kg DM with water treatment to 5698.62 mg/kg DM with plasma-activated water treatment. Similarly, the concentration of potassium ions removed from grass biochar rose from 10764.01 mg/kg DM to 14134.87 mg/kg DM under plasma-activated water treatment. This trend is consistent across other elements such as magnesium, calcium, and chloride. Notably, the concentration of phosphate ions removed from poplar biochar increased from 32.25 mg/kg DM with water treatment to 433.27 mg/kg DM with plasma-activated water treatment. These significant increases across all tested biochars and inorganic elements illustrate that the concentration of ions in plasma-activated water used for cleaning the biochar is higher than their concentration when water was used for cleaning. The higher concentration of ions in plasma-activated water means more efficient extraction and removal of ions from biochar, highlighting the superior efficiency of plasma-activated water treatment. Furthermore, the plasma-activated water was also superior in removing the ions from biochar produced from high salt content paludi culture biomass, such as reed and grass, which contains high levels of ions, including sodium and chloride. For instance, the concentration of sodium ions removed from reed biochar increased from 3613.23 mg/kg DM with water treatment to 10270.45 mg/kg DM with plasma-activated water treatment, and the concentration of chloride ions removed from grass biochar rose from 6613.02 mg/kg DM to 7900.53 mg/kg DM. This demonstrates the effectiveness of plasma-activated water treatment in substantially increasing ion extraction from biochar derived from saline biomass sources.

The cleaning of biochar with plasma-activated water significantly reduces the content of inorganics by 46%, compared to only a 4.13% reduction when using non-activated water, which directly impacts the BET surface area and porosity (Table 9). The BET surface area was increased by 18.45 m²/g in biochar treated with plasma-activated water compared to the original biochar, which is suitable for its application. Biochar treated with plasma-activated water exhibits a BET surface area of 243.15 m²/g, a single point adsorption total pore volume of 0.06 cm³/g, and a desorption total pore volume of 0.28 cm³/g. In comparison, biochar treated with not activated water shows a slightly lower BET surface area of 232.77 m²/g, with a total pore volume of 0.06 cm³/g (adsorption) and 0.28 cm³/g (desorption). Additionally, plasma-activated water treatment results in an average pore diameter of 0.99 nm (adsorption) and 4.68 nm (desorption), which is more favorable than the values for treatment with not activated water, which are 1.01 nm and 4.79 nm, respectively. These improvements indicate that plasma-activated water is more effective in enhancing the surface area and porosity of biochar, making it a superior method for biochar treatment. In Table 9 these results are summarized.

**Table 9: The poplar biochar treated with plasma-activated water, not activated water, and untreated biochar: BET surface area, pore volume, and pore size comparison**

| **Sample (treated with)** | **BET Surface Area (m²/g)** | **Single Point Surface Area at p/p° = 0.036** | **Pore Volume (cm³/g)** | **Adsorption Average Pore Diameter (nm)** | **Desorption Average Pore Diameter (nm)** |
|---|---|---|---|---|---|
| plasma-activated water | **243.15** | 215.22 | 0.06 (Adsorption) | 0.99 | 4.68 |
| | | | 0.28 (Desorption) | | |
| not activated water | **232.77** | 208.06 | 0.06 (Adsorption) | 1.01 | 4.79 |
| | | | 0.28 (Desorption) | | |
| untreated (original biochar) | **224.70** | 202.73 | 0.06 (Adsorption) | 1.05 | 4.35 |
| | | | 0.24 (Desorption) | | |

### Examples: Hydrochar - wet plasma

### Example 6

Hydrochar produced at 220°C for 3h in a high pressure reactor (18.7L), using cow manure digestate as feedstock. After production the treatment was performed using 1:40 (gram of hydrochar to water/ plasma-activated water ratio), treating time (40min), temperature (20 °C), and mixing speed of 150 rpm, was treated with not activated (deionized) water or plasma-activated water. The results show that deionized water removed 9.36% of ash while plasma-activated water removed 20.96% of ash content. The analysis of ash remaining after combustion of not treated hydrochar is shown in Figure 5a and the results are summarized in Table 10.

**Table 10: The SEM-EDX analysis data of the ash remaining after combustion of not treated hydrochar**

| **Element Number** | **Element Symbol** | **Element Name** | **Atomic Conc.** | **Weight Conc.** |
|---|---|---|---|---|
| 8 | O | Oxygen | 75.67 | 61.32 |
| 20 | Ca | Calcium | 4.75 | 9.63 |
| 14 | Si | Silicon | 5.13 | 7.30 |
| 12 | Mg | Magnesium | 5.17 | 6.36 |
| 15 | P | Phosphorus | 3.95 | 6.19 |
| 19 | K | Potassium | 1.86 | 3.68 |
| 16 | S | Sulfur | 1.32 | 2.15 |
| 11 | Na | Sodium | 1.59 | 1.86 |
| 26 | Fe | Iron | 0.41 | 1.16 |
| 25 | Mn | Manganese | 0.08 | 0.22 |
| 17 | Cl | Chlorine | 0.07 | 0.12 |

The removal of ash from hydrochar, helps to recover the nutrients, as fertilizer, while using the cleaned hydrochar for biofuel application, since the reduction of ash increases the higher heating value (HHV). The higher heating values of the original (untreated) hydrochar, the water-treated hydrochar, and the hydrochar treated with plasma-activated water were measured as 21.81, 22.06, and 22.66 MJ/kg, respectively. This shows a 20.96% reduction in ash using plasma-activated water, resulting in a 0.85 MJ/kg increase in HHV, which is important when the hydrochar is used as a solid biofuel. This means that treatment using plasma-activated water not only increases the HHV and generates more energy but also reduces slag formation, emissions, and corrosion during combustion by reducing the ash content of hydrochar.

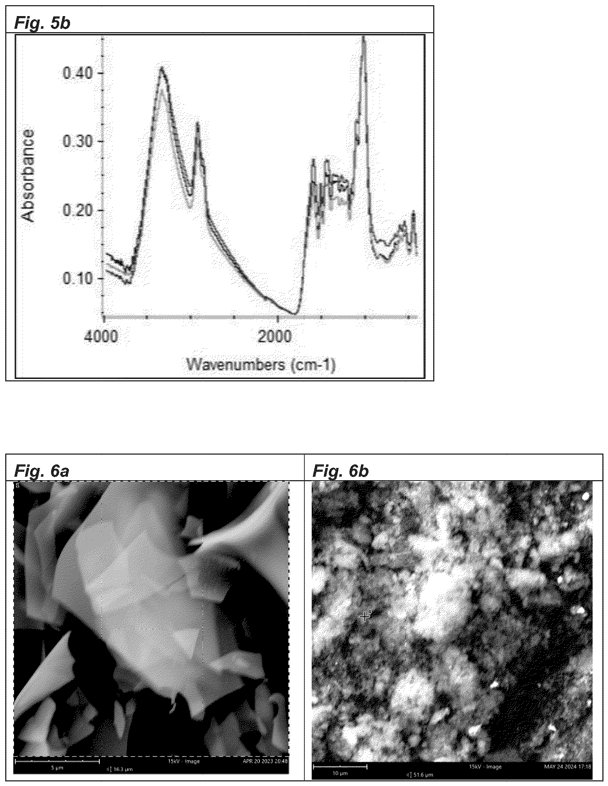

The FTIR results show no surface functional group alteration due to the treatment, with water or plasma-activated water compared to the not treated hydrochar (Figure 5b).

Table 11 (attached) clearly demonstrates that the treatment with plasma-activated water is significantly more efficient than water treatment in removing inorganic contaminants from hydrochar. For instance, the concentration of sodium ions removed from hydrochar increased from 1486.53 mg/kg DM with water treatment to 6233.63 mg/kg DM with treatment with plasma-activated water. Similarly, the concentration of potassium ions extracted rose from 13474.03 mg/kg DM to 13745.57 mg/kg DM under treatment with plasma-activated water. Other essential plant nutrients, such as magnesium and calcium, also showed substantial increases in removal, with magnesium increasing from 932.98 mg/kg DM to 1782.46 mg/kg DM and calcium from 603.69 mg/kg DM to 6707.28 mg/kg DM. The concentration of chloride ions removed increased from 3010.42 mg/kg DM to 3681.35 mg/kg DM. Notably, phosphate levels extracted from hydrochar increased from 272.29 mg/kg DM with water treatment to 3133.67 mg/kg DM and with treatment with plasma-activated water, and sulfate levels rose from 653.5 mg/kg DM to 4222.65 mg/kg DM. The presence of nitrate and nitrite in plasma-activated water further indicates the superior efficiency of this treatment method. These significant increases in nutrient ions suggest that plasma-activated water not only removes more contaminants, which resulted in an increase of HHV values of hydrochar, but also recovered higher levels of plant-available nutrients, which can be used as fertilizer.

### Examples: Graphene carbon nitride - wet plasma

### Example 7

During the production of graphitic carbon nitride (g-C₃N₄), the products can be contaminated with impurities such as iron and zinc, or with the catalysts that are added during the production. In case of advanced application where these impurities provide an obstacle, the impurities can be removed by plasma-activated water. As can be derived from the SEM-EDX analyses of the graphitic carbon nitride shown before treatment (Figures 6a, and Table 12) and after treatment (Figure 6b, and Table 13) with plasma-activated water the zinc and iron are removed by plasma-activated water leaving behind the nitrogen and carbon. All the impurities are removed without changing the structure of g-C₃N₄.

**Table 12: The SEM-EDX analysis data of graphitic carbon nitride before treatment with plasma-activated water**

| **Element Symbol** | **Element Name** | **Weight Conc.** |
|---|---|---|
| N | Nitrogen | 41.88 |
| Zn | Zinc | 27.12 |
| C | Carbon | 18.06 |
| O | Oxygen | 11.47 |
| Fe | Iron | 1.46 |

**Table 13: The SEM-EDX analysis data of graphitic carbon nitride after treatment with plasma-activated water**

| **Element Symbol** | **Element Name** | **Weight Conc.** |
|---|---|---|
| N | Nitrogen | 66.83 |
| C | Carbon | 33.17 |

### Examples: Activated carbon - wet plasma

### Example 8

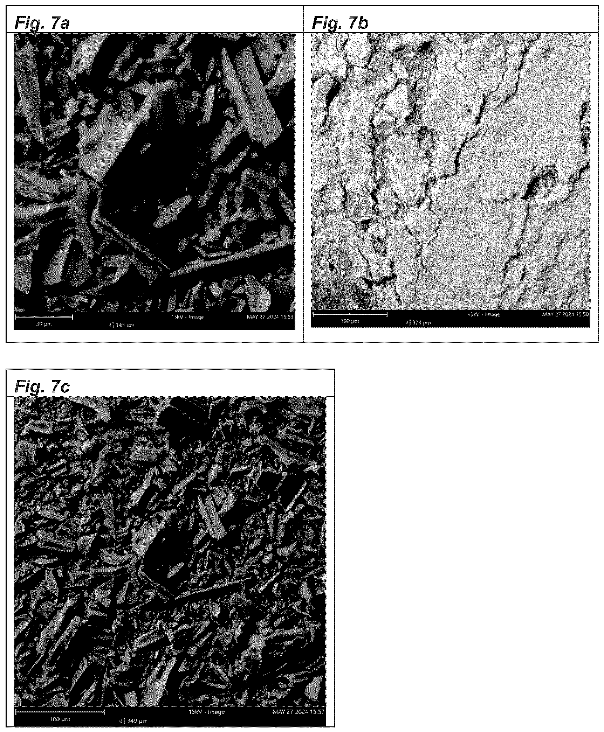

The effects of the treatment of activated carbon with plasma-activated water were investigated in this example. The experimental data show that activated carbon, with ash content (all the inorganic impurities) of 0.23% can be completely cleaned with plasma-activated water, thus leaving only carbon behind. SEM images were taken and SEM-EDX analyses were performed. In the Figures the respective SEM images are shown, namely of the original (not cleaned) activated carbon (Figure 7a), on the ash in the original (not cleaned) activated carbon (Figure 7b) and the clean activated carbon (Figure 7c). The ash content of the activated carbon treated with plasma-activated water reached to zero. The results show that the plasma-activated water removed all the impurities from activated carbon matrix, making the product suitable for advance applications, such as energy storage, or catalytic application. The results of the SEM-EDX analyses are summarized in Tables 14 to 16.

**Table 14: The SEM-EDX analysis data of the activated carbon before treatment with plasma-activated water**

| **Element Number** | **Element Symbol** | **Element Name** | **Atomic Conc.** | **Weight Conc.** |
|---|---|---|---|---|
| 6 | C | Carbon | 95.04 | 93.49 |
| 8 | O | Oxygen | 4.95 | 6.48 |
| 14 | Si | Silicon | 0.01 | 0.03 |

**Table 15: The SEM-EDX analysis data of ash that remained after combustion of not treated activated carbon**

| **Element Symbol** | **Element Name** | **Weight Conc.** |
|---|---|---|
| O | Oxygen | 47.22 |
| Ca | Calcium | 10.40 |
| Br | Bromine | 10.26 |
| Si | Silicon | 8.53 |
| P | Phosphorus | 5.97 |
| Mg | Magnesium | 5.40 |
| K | Potassium | 5.06 |
| S | Sulfur | 2.93 |
| Na | Sodium | 2.87 |
| Cl | Chlorine | 1.36 |

**Table 16: The SEM-EDX analysis data of the activated carbon after treatment with plasma-activated water**

| **Element Symbol** | **Element Name** | **Weight Conc.** |
|---|---|---|
| C | Carbon | 100.00 |

### Example 9: Preparation of hydrochar with use of plasma-activated water

In a furthermore preferred embodiment of the present invention the treatment of biomass with plasma-activated water can already be performed in the process of preparing hydrochar. This means that the process of hydrothermal carbonization, at temperature of 180-250°C, process time of 5 minutes to several hours in high pressure reactor system, itself also can be performed with plasma-activated water, and biomass instead of distilled water and biomass. This produces a clean hydrochar, with less ash content, while the nutrients are accumulated in the process liquid, and can be recovered.

### Summary of the results of treating carbonaceous materials with wet plasma in the form of plasma-activated water

Treating the carbonaceous materials with wet plasma in form of plasma-activated water has a great potential to be used as a superior method for impurity removal and significantly enhancing the quality and functionality of these materials. Biochar, derived from reed canary grass (example of high ash content paludiculture biomass) and other biomass types (poplar as woody biomass, and grass from grassland) typically contains high levels of salts and inorganics, resulting in a high pH that limits its wider use. Plasma-activated water effectively reduces both pH and ash content; for example, grass biochar treated with plasma-activated water showed a pH reduction from 10.09 ± 0.30 to 6.18 ± 0.15 and an ash content reduction from 21.33 ± 0.96 to 19.27 ± 0.81 (9.6% reduction). Similarly, poplar biochar treated with plasma-activated water achieved a pH of 5.94 ± 0.01 and an ash content of 4.13 ± 0.08 (46.31% reduction). Reeds biochar treated with plasma-activated water showed a pH reduction to 5.86 ± 0.02 and an ash content reduction to 11.36 ± 0.03 (25.95%). Hydrochar, produced from cow manure digestate, also benefits from plasma-activated water, with ash removal of 20.96% compared to 9.36% with deionized water. Graphene carbon nitride (g-C₃N₄) and activated carbon demonstrate enhanced impurity removal, with plasma-activated water effectively eliminating zinc and iron from g-C₃N₄ and achieving complete impurity removal in activated carbon. These results indicate that plasma-activated water is highly effective in reducing impurities, pH, and ash content, thereby enhancing the suitability of biochar, hydrochar, activated carbon, and graphene carbon nitride for a broader range of applications.

### Examples: Treatment with dry cold plasma

### Example 10 - Graphene - dry cold plasma

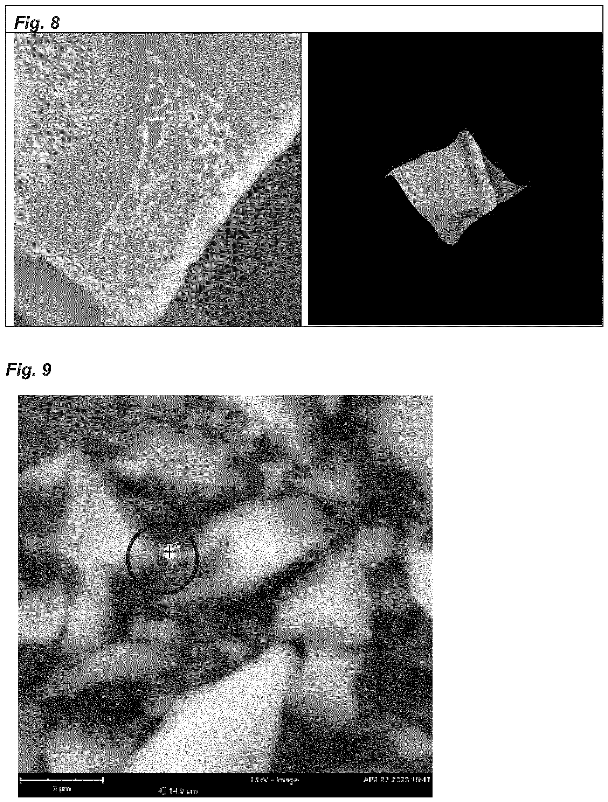

Initial observations revealed that a small-sized sample (Graphene A) with particles below 1µm contained impurities such as Si (1.89%) and Al (0.92%) (Figure 8, and Table 18). These impurities were heterogeneously distributed within the sample, suggesting that they might have been introduced during the milling process used for particle size reduction. However, both Graphene A and Graphene B were assumed to be the same product, differing only in particle size. The BET analysis showed no statistically significant difference in surface area and pore size between Graphene A and Graphene B (Table 17). Thus, the size reduction method employed for Graphen B to obtain Graphene A seems to not have effectively increased the BET surface area but introduced impurities like Si and Al.

**Table 17: BET surface area and pore size of the samples Graphen A and Graphen B before dry cold plasma treatment**

| **Sample Name** | **BET before (m²/g)** | **Pore Size (nm)** |
|---|---|---|
| Graphen A | 916.79 ± 27.09 | 0.61 |
| Graphen B | 949.95 ± 28.81 | 0.64 |

**Table 18: SEM-EDX analysis data of Graphen A**

| **Element Symbol** | **Element Name** | **Atomic Conc.** | **Weight Conc.** |
|---|---|---|---|
| C | Carbon | 73.43 | 66.69 |
| O | Oxygen | 25.21 | 30.50 |
| Al | Aluminum | 0.93 | 1.89 |
| Si | Silicon | 0.43 | 0.92 |

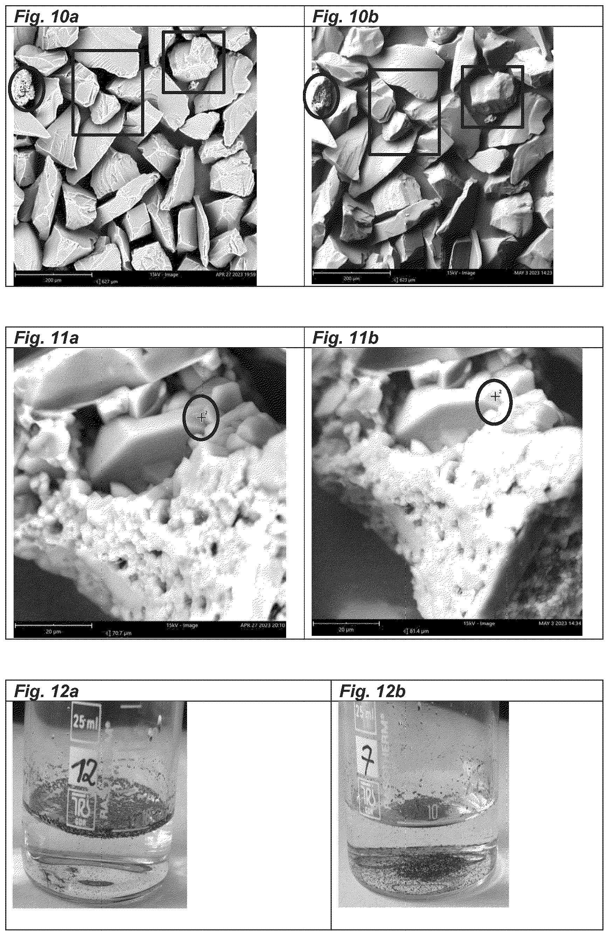

The SEM image of Graphene A is shown in Figure 9, where identified impurities are marked with a circle. Figures 10a and 10b show the SEM images of Graphen A before and after treatment with dry cold plasma. In addition, Figures 11a and 11b show SEM images of a specific zone in Graphene B where the complete removal of impurities is shown.

Tables 19 and 20 show the SEM-EDX analyses data of Graphene B before and after treatment. Tables 21 and 22 show the SEM-EDX analysis data of a specific zone of Graphene B before and after treatment.

**Table 19: SEM-EDX analysis data of Graphene B before treatment**

| **Element Symbol** | **Element Name** | **Atomic Conc.** | **Weight Conc.** |
|---|---|---|---|
| C | Carbon | 97.81 | 93.81 |
| Cl | Chlorine | 2.19 | 6.19 |

**Table 20: SEM-EDX analysis data of Graphene B after treatment**

| **Element Symbol** | **Element Name** | **Atomic Conc.** | **Weight Conc.** |
|---|---|---|---|
| C | Carbon | 98.26 | 95.03 |
| Cl | Chlorine | 1.74 | 4.97 |

**Table 21: SEM-EDX analysis data of a specific zone of Graphene B before treatment:**

| **Element Symbol** | **Element Name** | **Atomic Conc.** | **Weight Conc.** |
|---|---|---|---|
| C | Carbon | 98.64 | 96.08 |
| Cl | Chlorine | 1.36 | 3.92 |

**Table 22: SEM-EDX analysis data of a specific zone of Graphene B after treatment:**

| **Element Symbol** | **Element Name** | **Atomic Conc.** | **Weight Conc.** |
|---|---|---|---|
| C | Carbon | 100.00 | 100.00 |

The process gas in this treatment was Helium and the treatment was performed at 20 °C for about 3 minutes.

The major impurity observed in Graphene B was chlorine, likely present as chloride. SEM and EDX analysis demonstrated that the method step of treatment with dry cold plasma efficiently removed impurities from the graphene material, causing them to separate from the surface. The chlorine content was reduced by 20% (Figures 10a and 10b, Tables 19 and 20), to 100% (Figures 11a and 11b, Tables 21 and 22) in specific zones of the treated sample. Argon gas was used as a jet to clean the surface, and treatment times of 1, 3, and 5 minutes were employed. Longer treatment durations resulted in increased graphene purity, indicating the potential for optimization to achieve the highest quality. A comparison of the SEM images (Figures 10a, 10b, 11a and 11b), especially in the marked areas in the SEM images and of the EDX analysis data clearly demonstrate the effectiveness of the dry cold plasma treatment in cleaning the sample surface.

Further investigations on the graphene treated with dry cold plasma:
The hydrophobic nature of Graphene B was transformed into hydrophilicity after plasma treatment, as shown in Figures 12a and 12b. The wettability of the sample treated with dry cold plasma not only demonstrates the effect of the treatment but also allows us to utilize this characteristic for subsequent sample treatment, such as treatment with wet plasma in form of plasma-activated water, extraction with water, to effectively remove the separated impurities.

Additionally, the pH, conductivity, and redox voltage of the treated and untreated samples were measured after adding them to water. The dry cold plasma-treated sample showed a reduced pH of 4.84 compared to the untreated sample's pH of 6.22. Furthermore, the conductivity of the treated sample was higher, indicating a greater concentration of ions, potentially including dissolved chloride. The redox voltage of the treated sample increased by 300% compared to the untreated sample, suggesting a higher potential for electron transfer, which is advantageous for energy storage applications such as batteries and supercapacitors.

**Table 23: The pH, conductivity and redox voltage of the samples of Graphene B, before and after treatment with dry cold plasma:**

| **Sample name** | **pH** | **Conductivity µS/cm** | **Redox Voltage (mV)** |
|---|---|---|---|
| Graphene B before treatment | 6.22 | 116 | 30.6 |
| Graphene B after treatment | 4.84 | 128 | 122.4 |

During the experimentation, it was observed that two sessions of 5 minutes of dry cold plasma treatment had no significant effect on the BET surface area of the sample (Table 24). It is important to note that an increase in BET surface area is expected after identifying the optimal plasma conditions for the sample. The plasma treatment has the potential to create micropores, which can contribute to an enhanced surface area. However, it should be acknowledged that increasing the BET surface area while effectively removing impurities requires the identification of specific customized plasma conditions and gas composition.

**Table 24: BET surface area (m²/g) determined by N₂, and pore size (nm) determined by CO₂ of dry cold plasma-treated and not treated samples**

| **Sample name** | **BET (m²/g)** | **Pore size (nm)** |
|---|---|---|
| Graphene B before treatment | 949.95 ± 28.81 | 0.64 |
| Graphene B after treatment | 912.69 ± 27.19 | 0.66 |

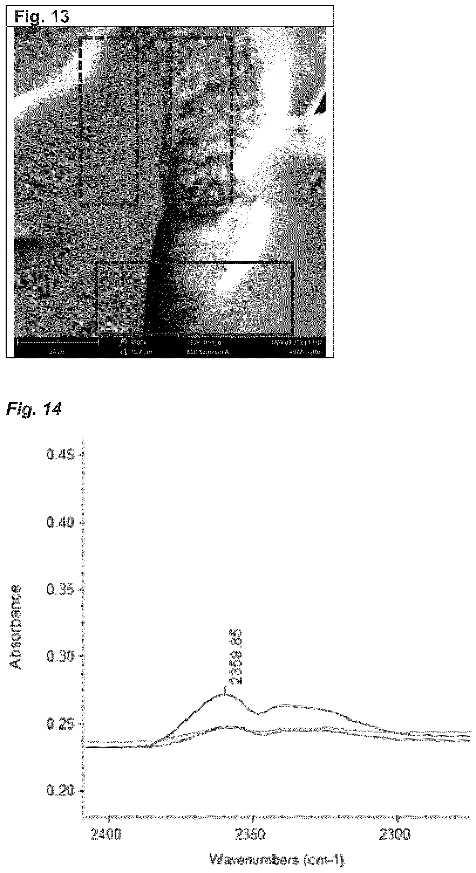

Figure 13 shows the SEM image of Graphene B after treatment with dry cold plasma. The markings in the image, from left to right mark the cleaned surface of the sample, , the removed impurities from the sample, and in the second row the formation of micropores.

### Example 11: Chloride extraction (using water as a solvent)

As mentioned earlier, the plasma-treated sample exhibited enhanced hydrophilicity, making it easily dispersible in water and prone to precipitation. We observed a significant increase in chloride extraction, with nearly 17 times more chloride extracted from the dry cold plasma-treated sample compared to the untreated sample (Table 25).

**Table 25: Chloride extraction of sample Graphene B before (GB-before) and after treatment with dry cold plasma (GB-AP)**

| **Sample name** | **Chloride extracted (mg/kg)** |
|---|---|
| GB-before | 106 |
| GB-AP | 1810 |

### Example 12: FTIR analysis before and after extraction

FTIR analysis was conducted on three samples: the original sample (GB-before), the dry cold plasma-treated sample (GB-AP), and the dry cold plasma-treated and chloride-extracted sample (GB-AP-AE) (Figure 14). Upon examination, no new functional groups were observed in the GB-AP-AE sample, similar to the original sample (GB-before). This finding provides reassurance that the original sample's structure remained undamaged, and the impurities were successfully removed without compromising the sample's integrity.

### Summary of the results of treating carbonaceous materials with dry cold plasma

The dry cold plasma treatment method step showcased promising results in effectively removing impurities, particularly chloride, from carbonaceous materials. The treated samples exhibited notable improvements in properties such as pH, conductivity, and redox voltage, indicating enhanced suitability for advanced applications. Throughout the process, the target impurities were successfully removed, specifically chloride, without causing any damage to the sample's structure. The target impurities can vary widely and may include inorganics such as heavy metals, as well as elements like P, K, and Ca, with the ultimate objective being the attainment of pure carbon.

For biochar, reduction of polycyclic aromatic hydrocarbons (PAHs) and heavy metals to permissible levels is crucial when considering agricultural applications, soil amendment, or water purification

In the case of hydrochar produced by hydrothermal carbonization, the primary aim is to minimize aromatic compounds such as phenol, HMF, furfural, catechol, guaiacol, cresol, as well as other organic and inorganic impurities (such as heavy metals Pb, Cd, Cu, Ni, Hg, Zn, Cr, As, Ag) that limit its targeted applications (agriculture, soil, environmental and fuel application).

**Table 8: The concentration (mg/kg DM) of removed ions from biochar using water, and plasma-activated water.**

| All data are indicated as mg/kg DM. | | | | | | | | | | | |
|---|---|---|---|---|---|---|---|---|---|---|---|
| **Type** | **Treat ment type** | **Sodium** | **Ammonium** | **Potassium** | **Magnesium** | **Calcium** | **Chloride** | **Nitrite** | **Nitrate** | **Phosphate** | **Sulfate** |
| 1 | W | 1581.53 | n.a. | 10764.01 | 433.72 | 863.97 | 6613.02 | n.a. | 17.267 | n.a. | 527.94 |
| 1 | PAW | 7671.88 | n.a. | 14134.87 | 943.5 | 3485.83 | 7900.53 | 25.44 | 5718.243 | 432.89 | 4049 |
| 2 | W | 201.6 | n.a. | 3149.04 | 364.36 | 1145.31 | 166.88 | n.a. | 8.704 | 32.25 | 244.02 |
| 2 | PAW | 5698.62 | n.a. | 6054.63 | 745.81 | 8016.13 | 891.24 | 141.61 | 6020.75 | 433.27 | 3863.11 |
| 3 | W | 3613.23 | n.a. | 6057.93 | 1334.36 | 651.16 | 6318.94 | n.a. | 12.61 | n.a. | 1966.41 |
| 3 | PAW | 10270.45 | n.a. | 8170.79 | 2331.64 | 5096.68 | 7261.72 | 32.74 | 5716.94 | 1431.8 | 6458.69 |

| | | | | | | | | | | | |
|---|---|---|---|---|---|---|---|---|---|---|---|
| Types: type 1 - grass biochar, type 2 - poplar biochar; type 3 - reed biochar Treatment types: water treatment - W; treatment with plasma-activated water - PAW | | | | | | | | | | | |

**Table 11: Concentration (mg/kg DM) of removed ions from biochar using water, and plasma-activated water.**

| All data are indicated as mg/kg DM. | | | | | | | | | | | |
|---|---|---|---|---|---|---|---|---|---|---|---|
| **Type** | **Treatment type** | **Sodium** | **Ammonium-N** | **Potassium** | **Magnesium** | **Calcium** | **Chloride** | **Nitrite** | **Nitrate** | **Phosphate** | **Sulfate** |
| Hydrochar | W | 1486.53 | 0 | 13474.03 | 932.98 | 603.69 | 3010.42 | 0 | 0 | 272.29 | 653.5 |
| Hydrochar | PAW | 6233.63 | 19.27 | 13745.57 | 1782.46 | 6707.28 | 3681.35 | 30.58 | 6086.514 | 3133.67 | 4222.65 |

| | | | | | | | | | | | |
|---|---|---|---|---|---|---|---|---|---|---|---|
| Treatment types: water treatment - W; treatment with plasma-activated water - PAW | | | | | | | | | | | |

## Claims

1. Method for removing impurities from carbonaceous materials, comprising a step of treating the carbonaceous materials with plasma, selected from dry cold plasma and wet plasma.

2. Method according to claim 1, **characterized in that** the treating with dry cold plasma is performed by contacting the carbonaceous materials with a cold plasma of at least one process gas, and **in that** the treating with wet plasma is performed by contacting the carbonaceous materials with plasma-activated water.

3. Method according to any of the preceding claims, **characterized in that** the method comprises the treating with both cold dry plasma and wet plasma, wherein the treating is performed in consecutively steps.

4. Method according to any of the preceding claims, **characterized in that** the one or the both treating steps are repeatedly performed.

5. Method according to any of the preceding claims, **characterized in that** the treating with dry cold plasma comprises the following steps of
a) placing the carbonaceous materials in powdered form in a plasma chamber,
b) reducing the pressure in the plasma chamber by means of a vacuum pump to a pressure of 1 Pa to 1000 Pa, at a temperature of 15°C to 40°C,
c) introducing the process gas into the chamber under mixing of the carbonaceous materials for a specific amount of time ranging from a few seconds to several hours
d) turning the process gas off, venting the chamber, removing the treated carbonaceous materials from the plasma chamber, and analyzing the treated carbonaceous materials

6. Method according to claim 5, **characterized in that** after step d) the steps a) to d) are repeated until the desired amount of impurities is removed from the carbonaceous materials.

7. Method according to any of claims 5 or 6, **characterized in that** after step d) the treated carbonaceous materials are subjected to the treatment with water or plasma-activated water in a washing step.

8. Method according to any of preceding claims, **characterized in that** the treatment with wet plasma comprises the following steps of
a) providing the carbonaceous materials in a container,
b) adding plasma-activated water,
c) stirring the dispersion,
d) drying the wet plasma-treated carbonaceous materials and
e) analyzing the treated carbonaceous material.

9. Method according to claim 8, **characterized in that** the steps a) to d) are repeated until the desired amount of impurities is removed from the carbonaceous materials.

10. Method according any of claims 8 or 9, **characterized in that** the weight ratio of carbonaceous materials to plasma-activated water is between 1:5 and 1:60, and the treating time is between 5 minutes to 180 minutes.

11. Method according to claim 10, **characterized in that** the weight ratio of carbonaceous materials to plasma-activated water is 1:40, and the treatment time is 45 minutes.

12. Method according to any of the preceding claims, **characterized in that** the carbonaceous materials are selected from biochar, hydrochar, activated carbon, graphene, graphene derivatives, and the mixtures thereof.

13. Method according to any of the preceding claims, **characterized in that** the impurities are selected from organic and inorganic impurities, and **in that** the inorganic impurities are present in their elemental form or as ions.

14. Cleaned carbonaceous materials prepared by a method according to any of claims 1 to 13, **characterized in that** the cleaned carbonaceous materials are suitable for use in agricultural applications, soil amendment, and water purification.
